(19)

**Europäisches Patentamt**
**European Patent Office**
**Office européen des brevets**

(11) **EP 4 586 636 A2**

(12) # EUROPEAN PATENT APPLICATION

(43) Date of publication:
   **16.07.2025 Bulletin 2025/29**

(21) Application number: **25151373.5**

(22) Date of filing: **10.01.2025**

(51) International Patent Classification (IPC):
   ***H04Q 11/00*** (2006.01)      ***G02B 6/36*** (2006.01)
   ***G02B 6/44*** (2006.01)

(52) Cooperative Patent Classification (CPC):
   **G02B 6/3608; G02B 6/44528; H04Q 11/0005;**
   **H04Q 11/0062;** H04Q 2011/0052

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH MA MD TN**

(30) Priority: **12.01.2024 US 202463620261 P**
   **16.12.2024 US 202418982264**

(71) Applicant: **Panduit Corp.**
   **Tinley Park, Illinois 60487 (US)**

(72) Inventors:
   • **Castro, Jose M.**
   **Tinley Park (US)**
   • **Huang, Yu**
   **Tinley Park (US)**
   • **Kose, Bulent**
   **Tinley Park (US)**

(74) Representative: **Roberts, Gwilym Vaughan et al**
   **Kilburn & Strode LLP**
   **Lacon London**
   **84 Theobalds Road**
   **London WC1X 8NL (GB)**

(54) **OPTICAL INTERCONNECTION MODULES FOR AI NETWORKS**

(57)   A optical fabric comprising a plurality of optical waveguides wherein the fabric has: $Np$ input ports with index $X$, and $Np$ output ports with index $Y$, an interconnection map between input ports with index $X$, and output ports with index $Y$ which is provided by a non-linear function $Y=F(X)$ that satisfies reversible properties given by $F(Y)=X$ or, $X=F(F(X))$ or $F^{-1}(X)$ $F(X)$, and which provides full connectivity from any group of $M_1$ adjacent input ports to any group of $M_2$ adjacent output ports wherein at least one of $M_1$ or $M_2$ is an even number, and wherein $M_1$ x $M_2 = Np$.

## Description

### CROSS REFERENCE TO RELATED APPLICATION(S)

This application claims benefit to U.S. Provisional Patent Application Serial No. 63/620,261, filed January 12, 2024.

### FIELD

The present disclosure relates to optical interconnection modules and methods to scale out spine-and-leaf switching networks, for an arbitrarily even number of uplinks.

### BACKGROUND

Traditional three-tier switch architectures comprising Core, Aggregation, and Access (CAA) layers cannot provide the low latency channels required for East-West traffic. The Folded Clos network (FCN) using optical channels, overcome the limitations of the three-tier CAA networks. The FCN topology utilizes two types of switch nodes, Spine, and Leaf. Each Spine is connected to each Leaf. The network can scale horizontally to enable communication between a large number of servers while minimizing latency and non-uniformity by simply adding more Spine and Leaf switches.

FCN enables successful deployment of remote direct memory access over converged Ethernet, (RoCE) essential to improve efficiency in high-performance computing and AI networks.

This architecture has been proven to deliver high bandwidth and low latency. However, for large numbers of switches, the Spine-and-Leaf architecture requires a complex mesh with large numbers of fibers and connectors, increasing the installation's cost and complexity.

To understand the complexity, we define $Ml$ as the number of ports used by the Leaf switches and $Nl$ as the number of Leaf switches, $Ms$ as the number of ports used by the Spine switches, and $Ns$ as the number of Spine switches. Following the original definition of $FCN$ and subsequent technical literature , all Spines transmit to all Leaf switches, leaving $Ns \times Ms$ channels or lanes or transmit data from Spine to Leaf, where $x$ is the multiplication operator. For high-speed data communications, an optical communication channel is often comprised of multiple lanes, where the sum of individual lanes constitutes the aggregate data rate. Since all Leaf switches transmit to all Spine switches as well, it follows that $Nl \times Ml$ lanes transmit data from the Leaf switches and $Ns \times Ms$ lanes transmit from the Spine to Leaf Switches.

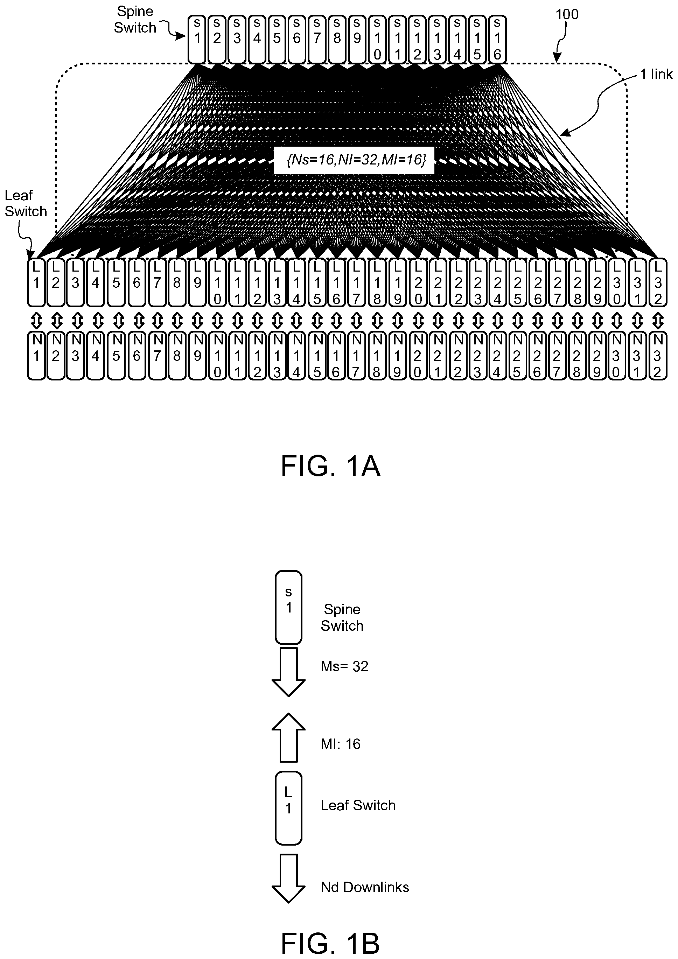

Figs. 1A and 1B show an example of an FCN that connects $Ns = 32$ Spine switches, **100** to $Nl = 32$ Leaf switches, **200,** using fabric **300.** Each line in the fabric, e.g., **305** represents one duplex channel. This fabric **300** requires Ns $x$ Ms = $Nl$ $x$ $Ml$ = 1024 duplex interconnections ($Nlanes = 2048$ fibers). Note that the figures focuses on the fabric topology and does not indicate the actual physical location of the Spine and Leaf switches that should follow industry telecommunications infrastructure Standard TIA-942-A.

It is accepted that Clos networks were invented in 1938 by Edson Erwin and further developed by Charles Clos in 1952. Later in 1985, fat trees (or FCN or Spine-and-Leaf network) were introduced by Charles Leiserson.

In a Spine-and-Leaf topology, with $Nl$ Leaf switches, $Ml$ uplinks per Leaf switch, $Ns$ Spine switches, and $Ms$ downlinks per Spine switch, full connectivity requires that $Nl \times Ml = Ns \times Ms$ as shown by FCN theory.

Figs. 1A and 1B show an example of an FCN that connects $Ns = 16$ Spine switches, each with $Ms = 32$ downlinks to $Nl = 32$ Leaf switches each with $Ml = 16$ uplinks, through an optical fiber fabric, **100.** In **100**, each line represents a multi-fiber link, with 1, 2, 4, 8, 12, or 16 fibers, where the number of fibers depends on the transceiver utilized. For example, using a bidirectional transceiver requires one fiber per link, a duplex Ethernet transceiver FR or LR requires two fibers per link, an Ethernet DR4, or SR4 transceiver, requires 8 fibers per link, and DR8, or SR8 requires 16 fibers per link.

For full interconnection in fabric **100,** $Ns \times Ms = Nl \times Ml$ =512 links, and assuming transceivers DR8/SR8 the fabric utilizes 8192 fibers. As the network scales more Leaf or Spine switches, the number of fibers and complexity of the connections increase. There are $Nd$ downlinks from each Leaf to nodes of servers, $N1,$ to $N32$. Assuming that the bandwidth per each link inside **100** is $Bw$, and the bandwidth per link from each Leaf to the leave server nodes is $Bn,$ the oversubscription ratio is defined as $O=(Bn \times Nd)/ (Bw \times Ml)$. For traditional datacenter applications. O is typically 2 or 3. However, machine learning training networks require $O=1$, which requires using a larger number of Leaf uplinks and the complexity of the fabric **100.**

Traditionally mesh fabrics such as the ones shown in Figs. 1A and 1B have been implemented over patch panels using hundreds or thousands of patch cords connections to deploy the network topology. More recently, the use of transpose boxes can help to deploy those networks while reducing installation errors. In US 8621111, US 2012/0250679 A1, and US 2014/0025843 A1, a method for scalable data transmission using a transpose box connecting two network tiers was disclosed. However, in those boxes, the network topology determines the box configuration, and changes might require box replacement. In WO 2010/9099771 A1, an interconnection box connects Spine and Leaf switches via a 1RU module using specific internal mesh cabling, but it is limited to set topologies. US 2015/0295655 A relates to multi-wavelength signals and requires the use of multiplexers and demultiplexers. US 11269152 offers a solution to optical shuffle box limitations, using multiple distribution frames and various connection methods for scalability. It requires complex patching through jumper assemblies with specific configurations to maintain network order and enhance scalability, but deployment details are incomplete.

Using transpose boxes, as shown in the prior art, can help to reduce installation errors. However, the prior art cannot easily be adapted to different network topologies, switch radixes, or oversubscription levels.

More recent prior significantly facilitates the deployment of network Spine-and-Leaf interconnections and the ability to scale out the network by using simplified methods. However, those apparatuses and methods require switches and transceivers with breakout capabilities, such as Ethernet DR4 or SR4 transceivers, where one channel can be breakout into four duplex channels, or DR8/SR8 transceivers where one channel can be breakout in eight duplex channels.

In this application, we disclose novel mesh apparatuses and methods to facilitate modular and flexible deployment, of fabrics of different radices, and different sizes using an arbitrary number of "even" uplinks that operate without breakout, or with limited breakout from parallel to parallel channels. For example, Infiniband NDR transceivers that can break out a transceiver 800G channel into two 400G, future Infiniband XDR breaking out 1.6T into two 800G or future 1.6 T Ethernet transceivers being developed in 802.3 dj.

The disclosed apparatuses and method also enable a simpler and better-organized interconnection mapping of different types of switches, to deploy and scale networks from a few tens to several hundreds of thousands of servers.

## SUMMARY

A optical fabric comprises a plurality of optical waveguides. The fabric has: $Np$ input ports with index $X$, and $Np$ output ports with index $Y$, an interconnection map between input ports with index $X$, and output ports with index $Y$ which is provided by a non-linear function $Y=F(X)$ that satisfies reversible properties given by $F(Y) =X$ or, $X=F(F(X))$ or $F^{-1}(X) F(X)$, and which provides full connectivity from any group of $M_1$ adjacent input ports to any group of $M_2$ adjacent output ports wherein at least one of $M_1$ or $M_2$ is an even number, and wherein $M_1 \times M_2 = Np$.

An optical interconnection assembly and method for the deployment and scaling of optical networks employing Spine-and-Leaf architecture is disclosed. The optical interconnection assembly has Spine multi-fiber optical connectors and Leaf multi-fiber optical connectors. The Spine optical connectors of the interconnection assembly are optically connected to multi-ferrule multi-fiber connectors of Spine switches via Spine patch cords. The leaf multi-fiber connectors are optically connected to Leaf multi-fiber connectors of Leaf switches via Leaf patch cords.

A special fabric designed to implement networks with virtually any number of downlinks, or uplinks ports and a variety number of spline and leaf is proposed. A plurality of optical waveguides, e.g., glass fiber, in said interconnection assembly serves to optically connect every Spine multi-fiber connector to every Leaf multi-fiber connector so that every Spine switch is optically connected to every Leaf switch. The optical interconnection assembly, which encapsulates the fabric complexity in one or more boxes, facilitates the deployment of network Spine-and-Leaf interconnections and the ability to scale out the network by using simplified methods described in this disclosure.

## BRIEF DESCRIPTION OF THE DRAWINGS

Fig. 1A shows s spine and leaf fabric, having 16 spines fully connected to 32 Leaf switches *{Ns=16, Nl=32, Ml=16}*.

Fig. 1B highlights that each leaf switch of the fabric of Fig. 1A has 16 uplinks.

Fig. 2A shows a front of module **400**.

Fig. 2B shows a rear of module **400**.

Fig. 2C shows one MF (multi-ferrule) port of module **400**.

Fig. 3A shows a top view of module **400**.

Fig. 3B shows a top view of module **400** with the cover removed to display the interconnections.

Figs. 4A along with Figs. 4B-4D show how a typical fabric can only be used for a single spine and leaf configuration, Fig. 4A shows that for {N s=4, Nl=8, Ml=4} there is full connectivity between spines (S) and leaves (L).

Fig. 4B shows that for {Ns=2, Nl=16, Ml=2} there is not full connectivity between S and L.

Fig. 4C shows that for {Ns=16, Nl=2, Ml=16} there is no full connectivity between S and L.

Fig. 4D shows that for {Ns=8, Nl=4, Ml=8} there is no full connectivity between S and L.

Fig. 5A, along with Figs. 5B-5D show how a universal-type fabric can be used for several S and L configurations, Fig. 5A shows that for {Ns=4, Nl=8, Ml=4} the fabric provides full connectivity between S and L.

Fig. 5B shows that for {Ns=2, Nl=16, Ml=2} the fabric provides full connectivity between S and L.

Fig. 5C shows that for {Ns=16, Nl=2, Ml=15} there is full connectivity between S and L.

Fig. 5D shows that for {Ns=8, Nl=4, Ml=8} there is full connectivity between S and L.

Fig. 6A shows a universal type fabris using the function F-32-001.

Fig. 6B shows a universal type fabris using the function F-64-001.

Fig. 6C shows a universal type fabris using the function F-128-001.

Fig. 7A shows a first example of a universal type fabric F-32-001, showing connections of $M_1$ adjacent input ports to $M_2$ adjacent output ports wherein $M_2$=8, $M_1$=4.

Fig. 7B shows a second example of a universal type fabric F-32-001, showing connections of $M_1$ adjacent input ports to $M_2$ adjacent output ports wherein $M_2$=16, $M_1$=2.

Fig. 7C shows a third example of a universal type fabric F-32-001, showing connections of $M_1$ adjacent input ports to $M_2$ adjacent output ports wherein $M_2$=4, $M_1$=8.

Fig. 7D shows a fourth example of a universal type fabric F-32-001, showing connections of $M_1$ adjacent input ports to $M_2$ adjacent output ports wherein $M_2$=2, $M_1$=16.

Fig. 8 shows an example of a GPU cluster displaying the backend network used for GPU server communication.

Fig. 9A shows the front or back of modules **400** with fabric ***F-64-001*** for an AI cluster with 32 GPU servers, G, with 16 uplinks (e.g., 8 NDR 800G breakout to 16 NDR 400G) connected to 16 Leaf switches.

Fig. 9B shows the back or front of modules **400** with fabric ***F-64-001*** for an AI cluster with 32 GPU servers, G, with 16 uplinks (e.g., 8 NDR 800G breakout to 16 NDR 400G) connected to 16 Leaf switches.

Fig. 10A shows the front or back of modules **400** with fabric ***F-64-001*** for an AI cluster with 16 L with 16 uplinks to 8 S.

Fig. 10B shows the back or front of modules **400** with fabric ***F-64-001*** for an AI cluster with 16 L with 16 uplinks to 8 S.

Fig. 11A shows the front or back of modules **400** with fabric ***F-64-001*** for an AI cluster with 64 L with 32 uplinks to 32 S.

Fig. 11B shows the back or front of modules **400** with fabric ***F-64-001*** for an AI cluster with 64 L with 32 uplinks to 32 S.

Fig. 12A shows the front or back of modules **400** with fabric ***F-64-001*** for data center applications for a fabric with 32 L with 6 uplinks to 6 S.

Fig. 12B shows the back or front of modules **400** with fabric ***F-64-001*** for data center applications for a fabric with 32 L with 6 uplinks to 6 S.

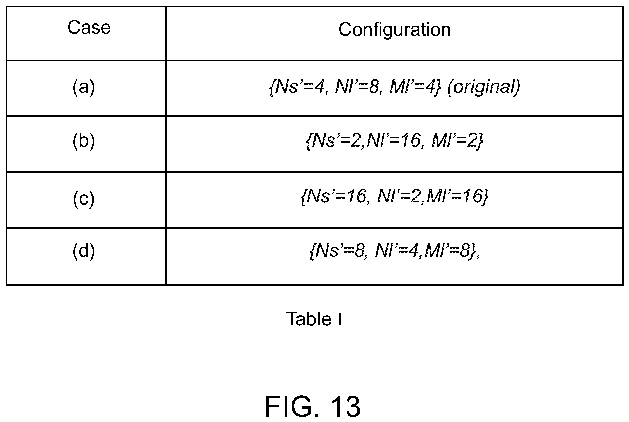

Fig. 13 shows Table I in which three fabric modifications keeping the same number of ports *Np=32* were generated.

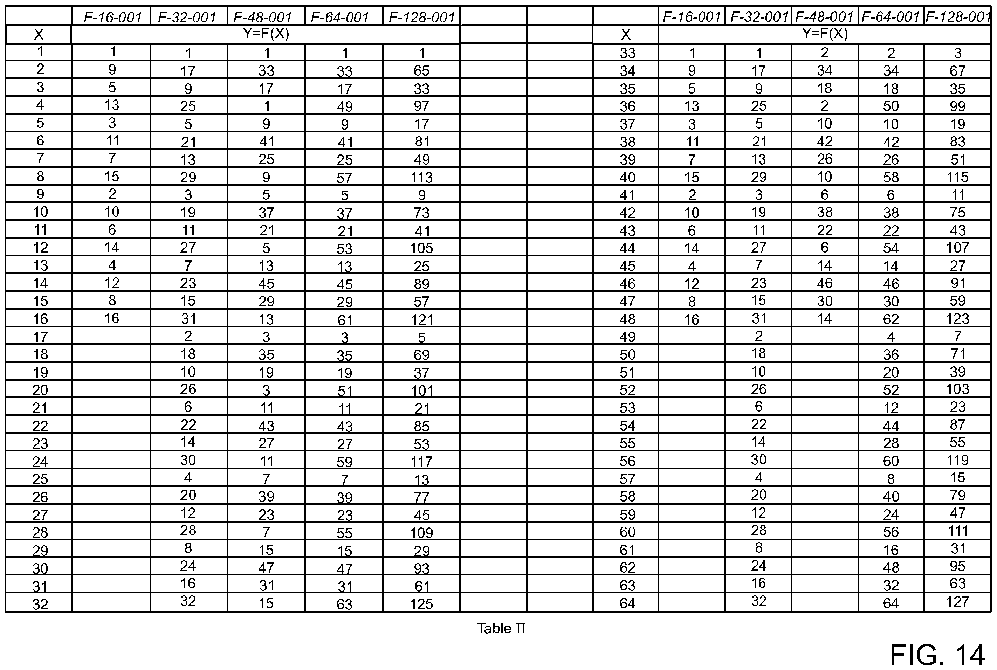

Fig. 14 shows Tabel II, F(x) for fiber universal-type fabrics. The table shows mapping up to port 64. Additional ports can be obtained from $F(X)$.

## DETAILED DESCRIPTION

Modular apparatuses and a general method to deploy optical networks of a diversity of uplinks and radices are disclosed in this document. The module and method can be used with standalone, stacked, or chassis-based network switches, as long as the modular connections utilize single ferrule or multi-ferrule (MF), MPO connectors (or other multi-fiber connectors) with more than 8 fiber pairs. In particular, switches supporting Ethernet-specified SR or DR transceivers in their ports, such as 100GBASE-SR4, 200GBASE-SR4, or 400GBASE-DR4, 400GBASE-SR8, 800GBASE-SR8, 1.6T SR8 (Terabit BiDi) or Infiniband 400G or 800G NDR, or future 1.6T XDR.

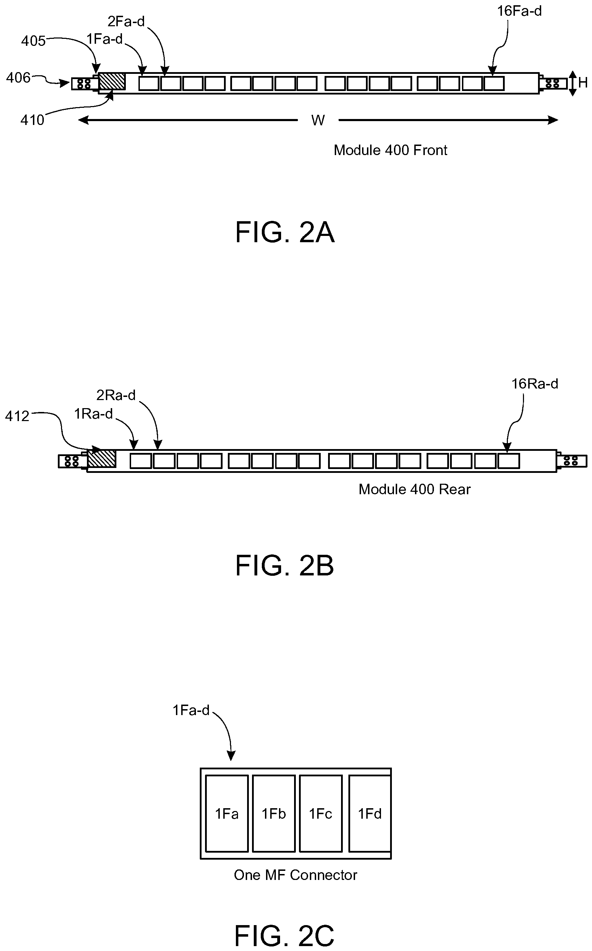

Figs. 2A and 2B shows a front and rear view of the disclosed module **400,** which is the key element in facilitating optical network deployment, reshaping, and scaling. In this embodiment, the module has 16 MF connector ports in the front and rear sections, comprising a total of 32 MF ports (or 128 single ferrule ports) as shown in Figs. 2A and 2B.

The MF ports can be implemented with arrays of small MPO ferrules, such as commercially available SN-MT or MCC connectors. Each ferrule can have 8, 12, or 16 fibers. For example, in Fig. 2C ports **1F-a-d** have 4 sub-ports **1Fa, 1Fb, 1Fc,** and **1Fd,** each with one 16-fiber MPO ferrule.

The module **400** width, W, is in the range of 12 inches up to 19 inches, and the height, H, is in the range of 0.4 to 0.64 inches. Rails, **405,** on both sides of the module, would enable the modules to be inserted into a chassis structure if required. Alternatively, using brackets **406,** the modules can be directly attached to the rack. By using the specified height range for this embodiment, up to four modules can be stacked in less than 2 RU depending on density requirements.

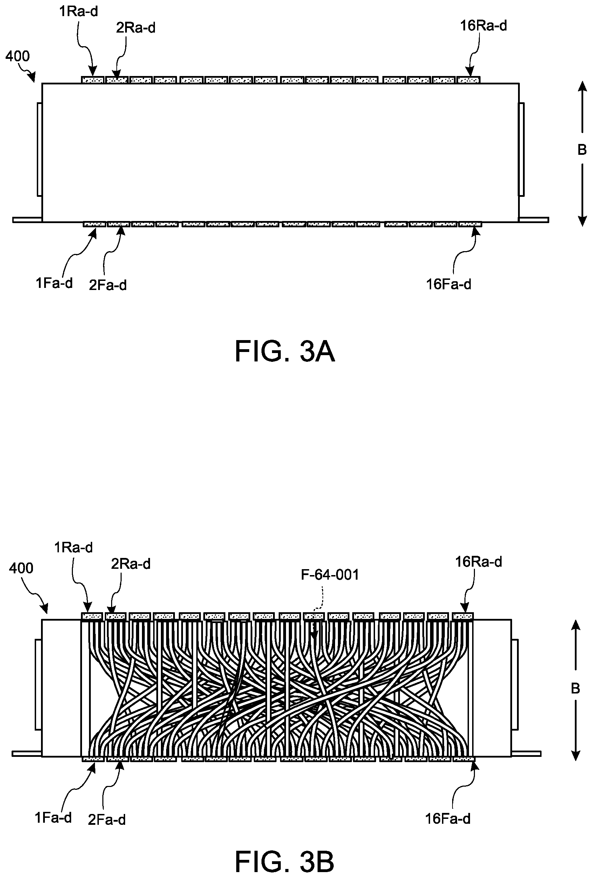

Fig. 3A shows a top view of the depicted module **400** of depth B > 3 inches with cover. Fig. 3B shows the interconnection scheme of the internal fabric, **F-64-001.** The internal fabric, **F-64-001,** which stands for fabric with $Np=64$ links, configuration design *#001,* comprises arrays of multiple optical waveguides, implemented in a variety of methods. For example, glass or plastic optical fibers are organized in the desired interconnection pattern and embedded and glued inside plastic film (optical flex-circuit method). Alternatively, polymer waveguides embedded in a plurality of layers in a printed circuit board (PCB) or direct laser written waveguides, where waveguides are written in 3D inside a glass using a femtosecond laser can be also utilized.

In this document, we employ the nomenclature *{Ns, Nl, Ml}* to represent a Spine-and-Leaf fabric that can connect *Ns* Spine to *Nl* Leaf switches, where each Leaf switch has *Ml* uplinks. This fabric has *Np* input and *Np* output ports, where $Np=Ns \times Ms =Nl \times Ml.$ In general, a fabric with $2 \times Np$ ports, where each of the *Np* input ports is connected only to one of the *Np* output ports can be implemented in different configurations, based on the number of input/output port permutations port connections, given by *Np!* where '*!*' represents the factorial function.

From that large set of possible configurations, the number of fabrics that can be used in a specific Spine-and-Leaf network, *{Ns, Nl, Ml},* is given by $(Nl!)^{Ns}$, assuming that *Ms=Nl* and *Ml=Ns.* Almost all those fabrics become useless when the number of spine or leaf switches changes. This happens even if the total number of ports is kept identical. This might look irrelevant for networks that are implemented only once and never modified. However, as AI models increase nearly 10X per year, scaling GPU networks could change in its configuration. Also, different section of the network, GPU network (backend), CPU network frontend, can require different Spine-and-Leaf configurations.

Considering these cases, prior art fabric modules do not provide the flexibility to absorb those changes. Moreover, since most of the modules work only for the specific fabric, their utilization in large network deployment requires the use of several types of fabric modules, which impact in cost, inventory management, and complexity of the deployment. Moreover, when considering future scaling of the network, a small change in the number of spines of leaves can require a major change in the fabric modules.

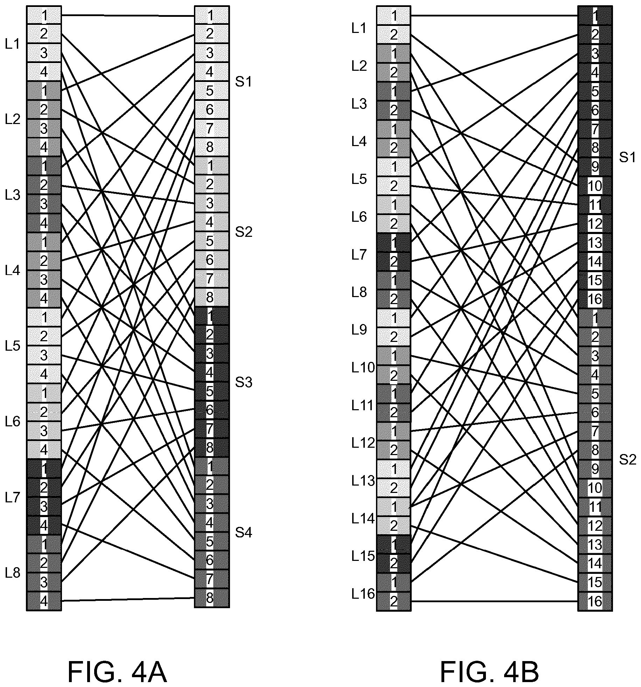

To illustrate the problem, we assume a small fabric, and for simplicity, we assume that *Ml/Ns=1,* which implies that each Spine connects to each Leaf using only one port. This simple fabric, *{Ns=4, Nl=8},* with *Np=32* ports, is designed to provide full connectivity between four Spine switches to eight Leaf switches as shown in Fig. 4A. We verify that for this, and almost all simulated networks, the fabric will not allow changes to the number of Spine or Leaf switches, even for an identical number of ports. For example, in Table 1 we generate three fabric modifications keeping the same number of ports *Np=32.*

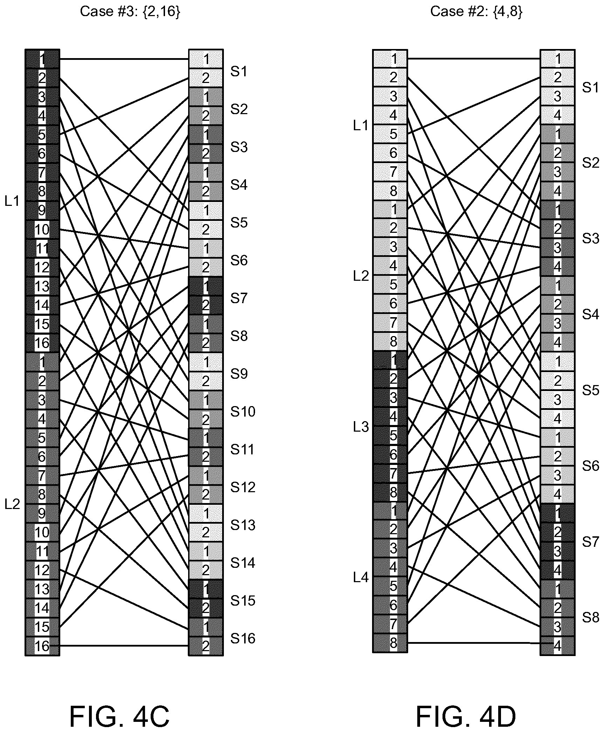

In Fig. 4A, the original configuration shows a full connection between the spine and leaf switches. As designed, at least one port of each Leaf connects to one port of the Spines. For Fig. 4B, we increased the number of Leaf switches to 16, each with two ports, and changed the number of Spines to 2, each with 16 ports. In this case, as shown in Fig. 4B, it can be seen the Leaf switches cannot connect with all the Spines. For example, two ports from Leaf #1 connect to Spine # 1 but there are no ports of Leaf #1 that connect to Spine #2. Similar issues occur with all the other Leaf switches. Therefore, if a network configuration changes, the fabric would need to be replaced even if the number of ports per module is kept the same. Figs. 4C and 4D show a similar problem for all the other cases in Table 1; there is no full connectivity between spine and leaf switches when their number change.

Full modeling of a large number of fabrics shows the same problem. Although they can provide full connectivity between a bespoke Spine and Leaf switch configuration they cannot operate when the number of Spines or Leaf ports changes.

One might consider that this is an inherent limitation of the fabrics and therefore a universal module that can be used for multiple networks is not feasible. However, a deeper analysis of the problem performed by the inventors indicate that this is not the case. We found that a mapping function, $Y = F(X)$, where $X$ is the index of input ports, $X=1$ to $Np$, and $Y$ is the index of the output ports that not only enable full connectivity for a Spine-and-Leaf *{Ns, Nl, Ml}* but also a large set of potential variations in its configuration. We can estimate approximately that the variations on the Spine-and-Leaf network are represented by *{Ns x $2^k$, Nl x $2^{-k}$}* where $k$ is an integer number that ranges from *-log2(min(Ns,Nl))* to *+log2(min(Ns,Nl))*.

In general, the mapping function $Y = F(X)$, can be described as,

$$F(X) = Bin2Dec(FlipDigit(Dec2Bin(X-1)) + 1 \quad (1),$$

where *Dec2Bin*(.) is a function that convert a decimal number to binary, *FlipDigit*(.) is a function that reverse the bits of the binary number, and *Bin2Dec*(. ) is a function that convert binary number to decimal numbers.

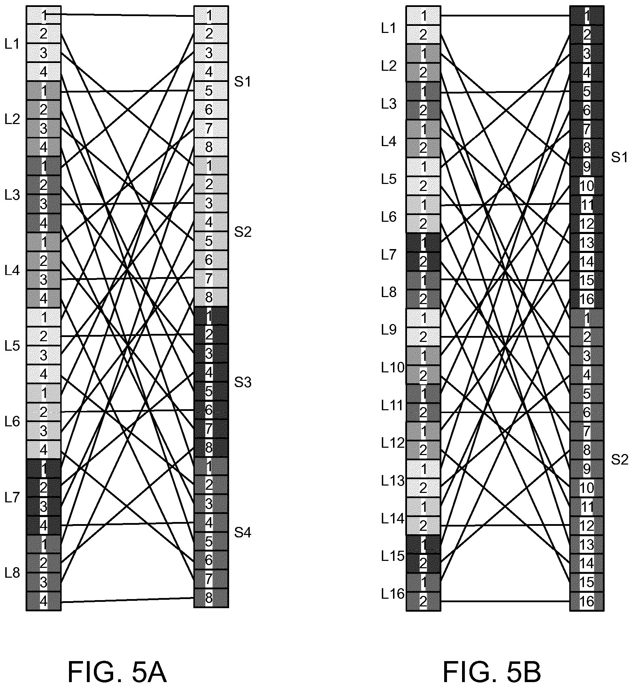

The mapping function can convert any input index to an output index, which represents the interconnection between two ports. We provide a detailed example of the mapping for this type of fabric with 32 input and 32 out ports. In this fabric, we select port #2, port index $X=2$, and compute the binary representation of $X-1=1$ as '00001' and the bits are flipped, producing '10000' which results in output index $Y=17$ after conversion to decimal number and increased by one. Therefore, the input port 2 interconnects to output port 17. We can use this function for all the ports of the fabrics *{Ns=4, Nl=8, Ml=4}* and produce the interconnection diagrams shown in Figs. 5A - 5D.

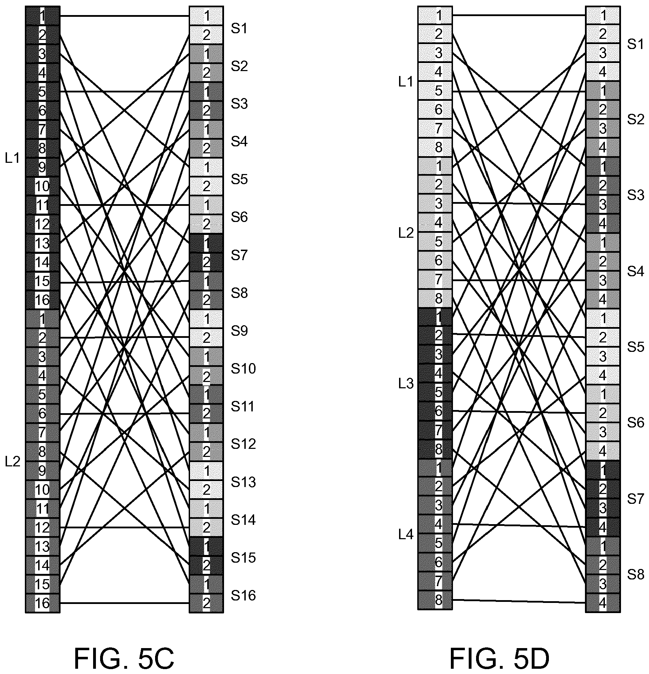

This fabric provides full connectivity between Spine and Leaf switches for all the variations described in Table I. For example, in Fig. 5A the fabric fully connects four Spines, with 8 ports each, to eight Leaf switches, 4 ports each. In Fig. 5B we reduce the number of Spines and increase the Leaf switches as shown in Table I and notice that full connectivity is maintained. Similar behavior occurs for the other cases as shown in Figs. 5C and 5D.

Therefore, this fabric, labeled here as universal-type fabric, can be used for multiple network configurations, creating opportunities for a new type of fabric modules, such as **400** other embodiments shown in this disclosure, that not only encapsulate sections of the network but can be used as identical building blocks (such as bricks in a building) to facilitate the deployment of large datacenters, AI clusters or other types of optical networks.

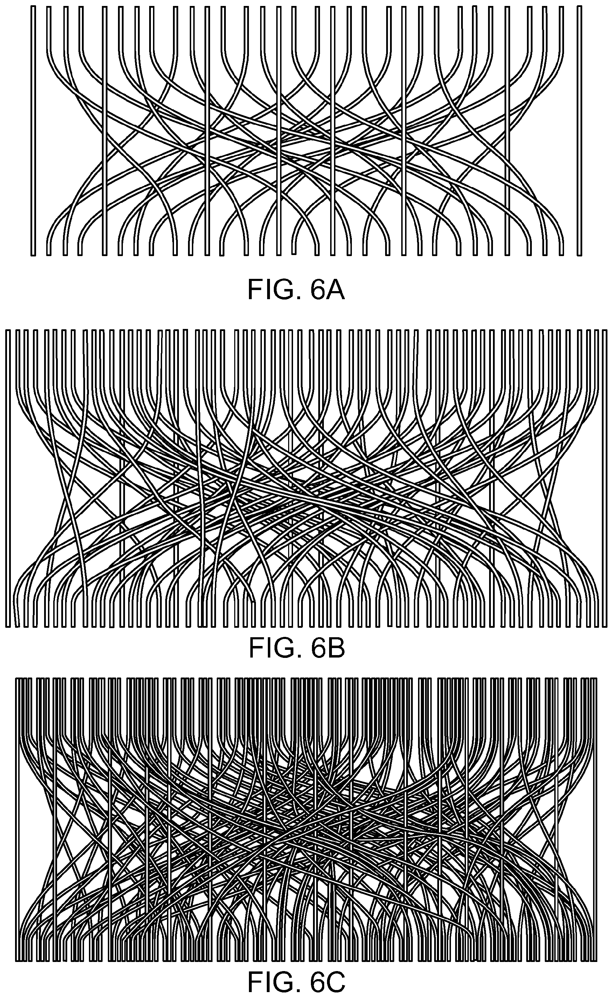

The function $F(X)$ was used to produce the fabrics of a diverse number of ports, for example, details of fabric **F-64-001**, used in module **400** (Fig. 3B), are shown in Fig. 6B. Other fabrics for smaller or larger number of ports that share the same capacity to operate with modification of the original fabric are shown in Fig. 6A for $Np= 32$ ports, **F-32-001** and Fig. 6C for $Np=128$ ports, **F-128-001**. As mentioned, there are a large number of potential permutations of these fabrics, but only one fabric, the fabric with the index 001 in our nomenclature represents universal-type fabrics (flexible and symmetric). Interconnection maps for some universal-type fabrics from **F(X)** are shown in Table II, for some of the fabrics.

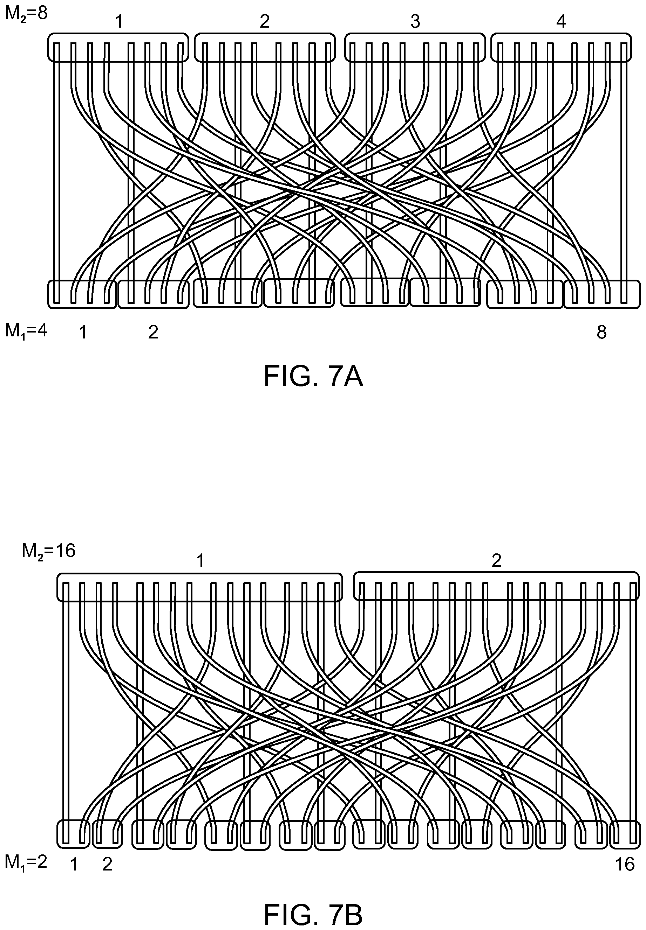

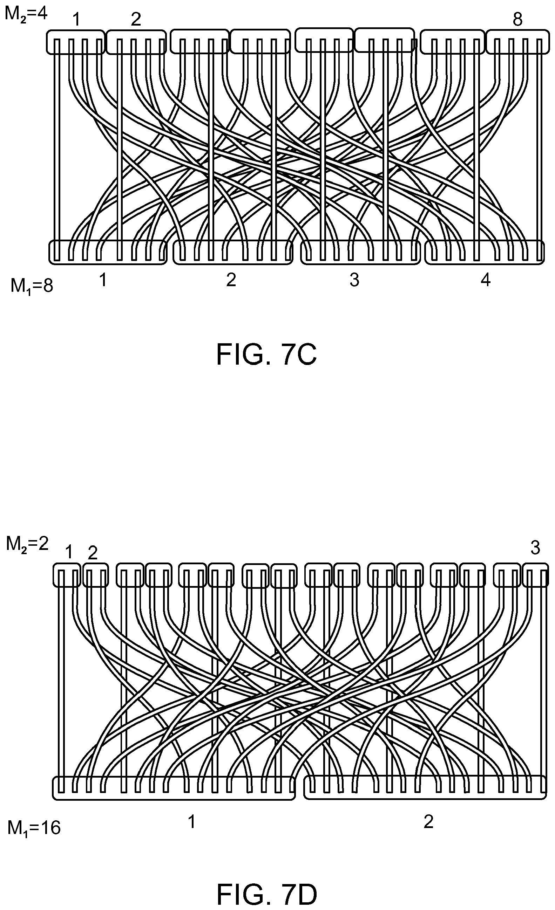

General properties of the fabric are the non-linear characteristic of the function, $Y=F(X)$ that satisfy reversible property given by $F(Y)=X$ or, $X=F(F(X))$ or $F^{-1}(X)=F(X)$. For example, in Table II, for universal-type fabric **F-16-001**, we can select any $X$ value, e.g., $X=2$, and show that $F(F(2))=2$ and therefore, $F^{-1}(2)=F(2)$. Those properties enable a reversible fabric. In addition, from Table II, and in general from the described equation $Y=F(X)$, it can be shown that we can connect any group of $M_1$ adjacent input ports to any group of $M_2$ adjacent output ports when either $M_1$ or $M_2$ is an even number and $M_1 x M_2 = Np$. For example, Figs. 7A - 7D show 4 interconnection cases for universal-type fabric **F-32-001**.

In Fig. 7A, there are 4 groups of $M_2=8$ adjacent output ports connected to 8 groups of $M_1=4$ input ports. As shown in the figure, any input group connects to any output group using the same number of connections. For example, in Fig. 7B, which has two $M_2=16$ output groups and 16, $M_1=2$ input groups, output group 1 connects to any of the 16 input groups and vice versa. In Fig. 7D $M_2=2$, $M_1=16$, the reverse case, any of the 16 output groups connect to any of the two input groups.

The method using the described function $F(X)$ helps also in the construction of the fabric modules since it produces symmetric fabrics, which show periodical patterns. Other properties, $F(X)-F(X-1) = Np/2$ (for $X>1$ assuming $Ns/Ml=1$), and $F(X-1) > F(X)$ for $X$ odd > 1 produce repeated crossing points, and other periodicity are advantageous for the decomposition of the fabric in smaller pieces, something similar to factoring polynomial functions, so complex fabrics can be implemented based on smaller ones.

In general, for a given number of ports $Np$, there is only one universal-type fabric, one in $Np!$ fabrics that have the mentioned properties, flexibility to accommodate diverse networks, and symmetries, for example, any universal-type fabric such as the one shown in Figs. 6A - 6C can be vertically flipped without producing changes in the interconnections.

Application on how to use the modules with the universal-type fabrics, **F-Np-001** are shown the in next section of this disclosure.

Applications of Module **400**

Universal-type fabrics, *F-Np-001* for different numbers of ports can be implemented in modules **400** of less than 0.5 RU with multi-fiber connectors MPO or multi-fiber multi-ferrule connectors such as SN-MT or MMC. Some of the fabrics that can be used in modules **400** are shown in Figs. 6A - 6C. For relatively small networks, **400** can be implemented with universal fabrics *F-16-001* or *F-32-001* for Leaf switches with uplinks, *Ml,* ranging from 2 to 12 uplinks (even numbers). Larger fabrics using a larger number of uplinks, $Ml \geq 16$, such as some used for machine learning training networks can require universal-type fabrics *F-64-001* or even *F-128-001.*

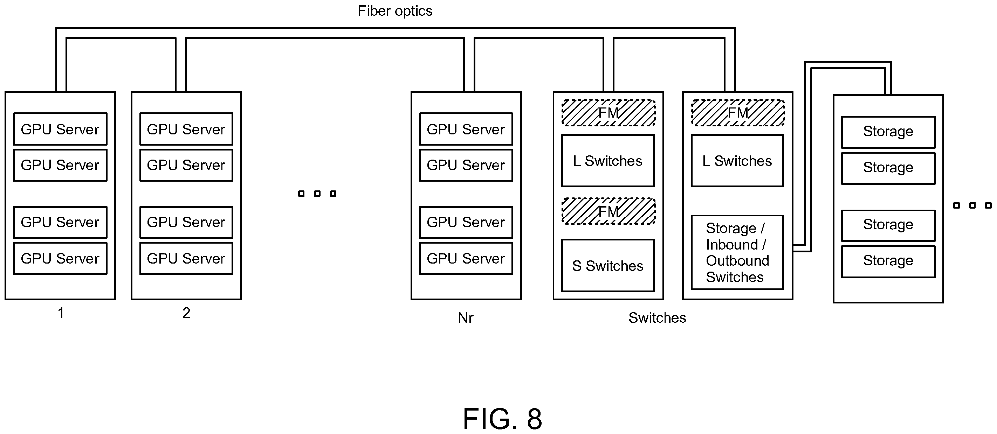

Here we use *F-64-001* to illustrate how the modules can be used in machine learning training networks where often two types of Spine-and-Leaf networks are used, one between the GPU servers and the Leaf switches, and another one from Leaf to Spine switches. Fig. 8 shows a schematic that represents a machine learning training cluster, showing the GPU servers. The servers can accommodate 4, 8, or more advanced GPUs, with storage, NICs, internal switches, and CPU, and have 4, 8, or more optical ports, QSFP-DD or OSFP, that can operate at Ethernet or Infiniband rates up to 800 Gbps per port, today, and 1.6 Tbps in the near future. Those transceivers that typically utilize MPO connectors with 16 fibers or duplex MPO ports each with 8 fibers, can breakout into lower speeds transceivers that use MPO connectors with 8 fibers. For example, an 800G transceiver (2 MPOs with a total of 16 fibers) can breakout into two 400G transceivers (8 fibers). Therefore, even in a small AI cluster, the fiber optics links between servers and switches can easily exceed several thousands of fibers. In this cluster, we will focus first on the connection between GPU servers (G) and the Leaf switches (L Switches) and then on the connection between L switches to Spine switches (S switches). In the figure, we show potential locations where the fiber modules (FM) **400** can be installed.

We will assume a cluster with 32 servers, e.g., Nvidia DGX server each with eight H100 GPUs and 16 optical uplinks that connect to 16 Leaf switches, each with 8 uplinks that connect to 8 Spine switches. The fabric that represents the interconnections from the GPU servers to the Leaf switches resembles the fabric shown in Fig. 1A, where the Leaves (Ls) are replaced by servers (Gs) and the Spines by Leaves. In that case, each link corresponds to 8 fibers.

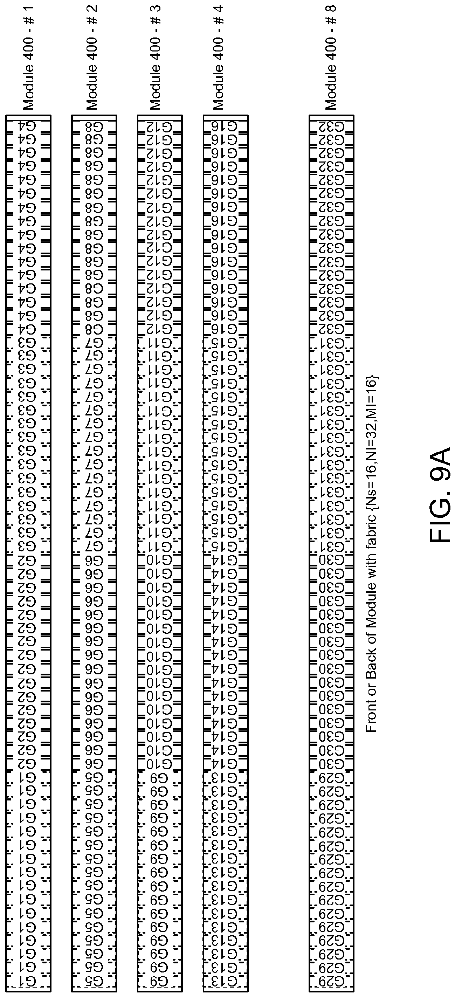

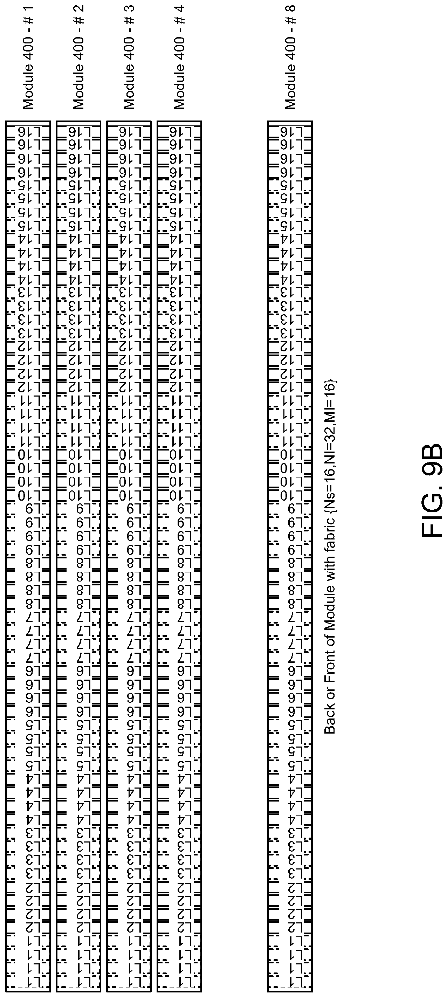

Using the modules **400,** this network can be implemented in less than 4RU space, with a stack of eight modules, each containing a universal-type fabric *F-64-001* as shown in Figs. 9A and 9B, where the Leaf switches connect in one side of the modules.

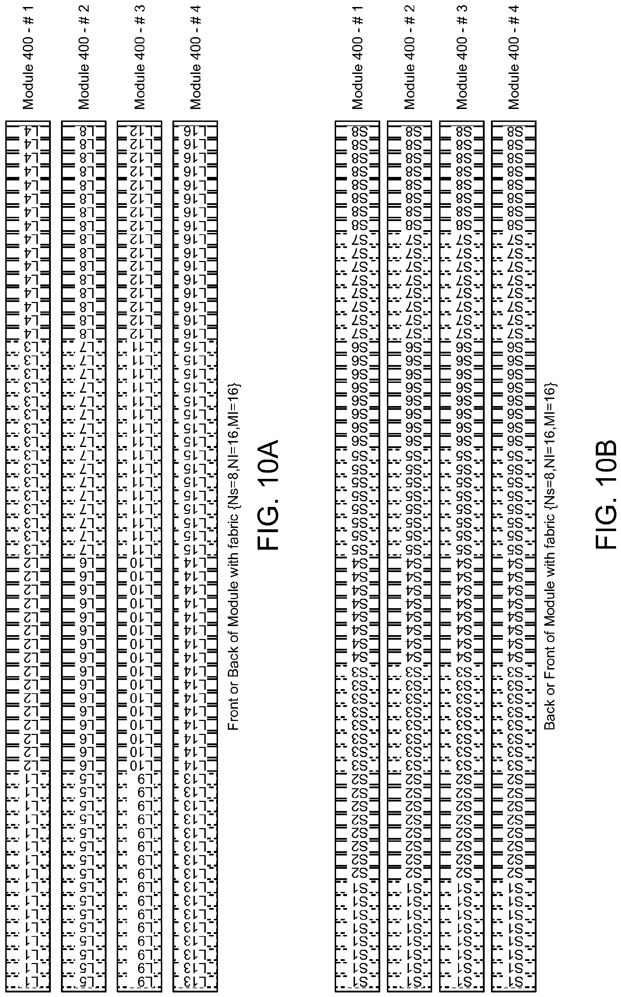

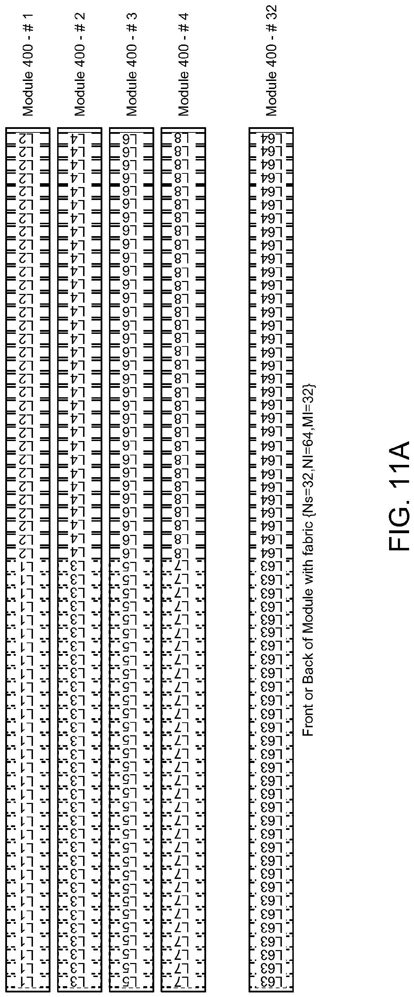

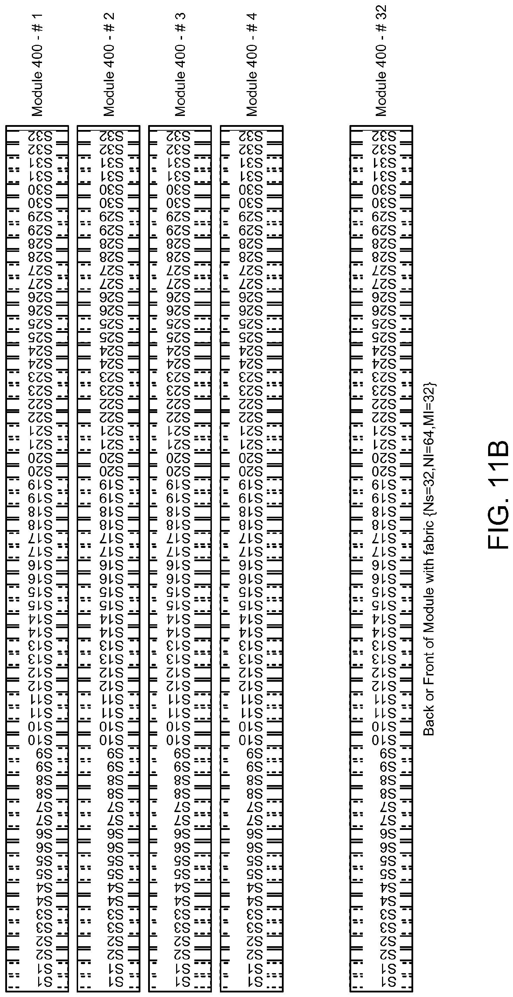

Similarly, a stack of four modules **400,** occupying less than 2 RU space, can be used to connect the 16 Leaf switches to 8 Spine switches, as shown in Figs. 10A and 10B. Using the modules **400,** the AI cluster can grow to a large number enabling tens of thousands of GPUs. For example, a network with 32 Spine and 64 Leaf switches can be implemented using 32 modules **400** occupying less than 16 RUs, as shown in Figs. 11A and 11B. This implementation can potentially connect 256 GPU servers or around 2048 GPUs.

Using large chassis switches such as Nexus 9000 or Arista 7800 as Spines, it is possible to increase the number of GPU servers to several tens of thousands. In all those cases, modules **400** can simplify the scaling of AI networks.

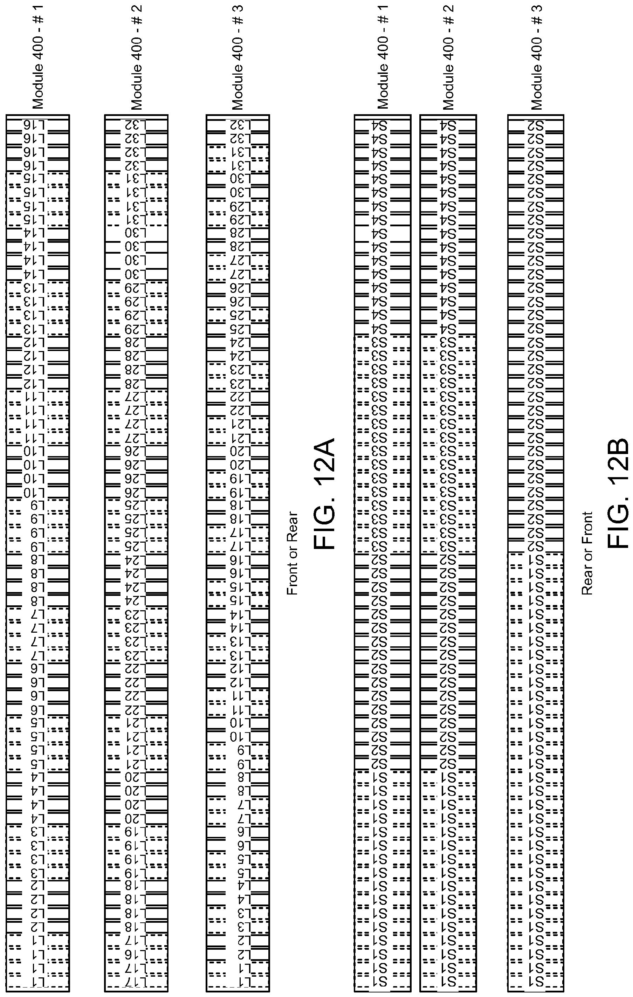

Previous examples showed the application examples of modules **400** for the network that connects the GPU servers and the backend network. In AI clusters, some fabrics connect servers to storage or CPU servers. Those datacenters fabrics tend to have oversubscriptions greater than one and to use less number of uplinks. The same type of modules **400** can be used. Figs. 12A and 12B show a case using 32 Leaf switches with six uplinks that connect to six Spine switches. Only three modules **400** are needed for this network. However, the last one has the inputs and outputs organized differently to accommodate the six uplinks. In this example, the fabric, {Ns=6, Nl=32, Ml=6} was divided in two fabrics, {Ns=4,Nl=32, Ml=4} which require two modules **400** (module #1 and #2) and one fabric{Ns=2,Nl=32,Ml=2} which requires one module **400** (module #3). A similar method can be applied to any other fabric with an even number of uplinks.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

**Claims**

1. A optical fabric comprising a plurality of optical waveguides wherein the fabric has:

    $Np$ input ports with index $X,$ and $Np$ output ports with index $Y,$
    an interconnection map between input ports with index $X,$ and output ports with index $Y$ which is provided by a non-linear function $Y=F(X)$ that satisfies reversible properties given by $F(Y)=X$ or, $X=F(F(X))$ or $F^{-1}(X)=F(X),$ and which provides full connectivity from any group of $M_1$ adjacent input ports to any group of $M_2$ adjacent output ports wherein at least one of $M_1$ or $M_2$ is an even number, and wherein $M_1 \times M_2 = Np.$

2. The fabric of claim 1, wherein an interconnection table is defined by a function, F$(X)$= Bin2Dec(FlipDigit(Dec2-Bin(X-1))+1).

3. The fabric of claim 1 or 2, wherein either:

   the fabric is used in a Spine and Leaf network with $N_s$ Spines and $Nl$ Leaf switches wherein $M_1/M_2 = K \times N_S/Nl$ and $K$ is an integer positive number,
   or
   the fabric is used in a Spine and Leaf network, with $N_s$ Spines and $Nl$ Leaf switches wherein $M_2/M_1 = K \times Ns/Nl$ and $K$ is an integer positive number.

4. The fabric of claim 3, wherein at least one of:

   the fabric is configured to connect all $Ns$ Spines to all $Nl$ Leaf switches, where $Nl$ or $Ns$ is an even number; or
   the fabric is configured to connect all $Ns$ Leaf switches to all $Nl$ Servers, where $Nl$ or $Ns$ is an even number.

5. An apparatus for forming an optical fabric comprising a plurality of multi-fiber connector adapters where the adapters connect to network equipment in a data communications network, such as Spine and Leaf switches, and an internal mesh having at least 128 optical waveguides, wherein a light path of connected transmitters and receivers are matched to provide proper optical connections and wherein the internal mesh is configured to enable an arbitrary even number of uplinks from Leaf switches to Spine switches or Servers to Leaf switches.

6. The apparatus of claim 7, wherein at least one of:

   the apparatus is configured to be installed in a rack and is configured to be stacked to provide folded Clos network topology of different sizes and radixes;
   the apparatus is configured to be used to scale optical networks from four to thousands of switches;
   the apparatus is configured to be stacked to provide folded Clos network topology for switches using an even number of uplinks where each of those uplinks comprises multi-fiber connectors;
   the apparatus is configured be used to implement fabrics to connect several hundred thousand GPUs;
   the apparatus is configured to provide redundant paths for reducing the risk of network failure due to interconnection errors;
   the apparatus has a small form factor that enables stacking of at least 2 apparatuses in one RU, allowing the stacking of up to 132 apparatuses per rack; or
   the apparatus is configured to implement the optical fabric of any of claims 1 to 4.

7. A structured cable system comprising a stack of modules, wherein each module has a plurality of optical parallel connector adapters and incorporates an internal fabric or mesh, and wherein the internal mesh is configured to enable full connectivity from any group of $M_1$ adjacent input ports to any group of $M_2$ adjacent output ports wherein at least one number, $M_1$ or $M_2$ is an even number, and a number of input ports is equal to a number of output ports, and given by $M_1 \times M_2$, wherein the stack of modules is configured for use in deploying or scaling various Clos network topologies.

8. The structured cable system of claim 7, wherein the structured cable system is configured to be used to scale optical networks from two to ten thousand switches.

9. The structured cable system of any of claims 7 to 8, wherein the structured cable system is configured to provide redundant paths for reducing a risk of network failure due to interconnection errors.

10. The structured cable system of any of claims 7 to 9, wherein the structured cable system is configured to enable fabrics with an arbitrary even number of uplinks.

11. The structured cable system of any of claims 7 to 10, wherein the internal fabric or mesh is an optical fabric in accordance with any of claims 1 to 4.

12. A fiber optic module apparatus, which comprises, a main body, an internal fabric made of optical waveguides, a front face, a rear side, a left side, and a right side wherein the front face accommodates a multiplicity of multi-fiber connectors, the rear face accommodates a multiplicity of multi-fiber connectors, identical in number to the front face, an internal structure providing space for optical lanes of optical fibers or optical waveguides, wherein the internal mesh is configured to enable full connectivity from any group of $M_1$ adjacent input ports to any group of $M_2$ adjacent output ports where at least one number, $M_1$ or $M_2$ is an even number, and where the number of input ports is equal to the number of output ports, where the total number of ports is given by $2 \times M_1 \times M_2$.

13. The fiber optic module apparatus of claim 12, wherein the fiber optic module is configured to be stacked to provide folded Clos network topology of various radixes.

14. The fiber optic module apparatus of any of claims 12 to 13, wherein the internal fabric or mesh is an optical fabric in accordance with any of claims 1 to 4.

FIG. 1A

FIG. 1B

405

406

2Fa-d

1Fa-d

410

16Fa-d

H

W

Module 400 Front

FIG. 2A

412

2Ra-d

1Ra-d

16Ra-d

Module 400 Rear

FIG. 2B

1Fa-d

| 1Fa | 1Fb | 1Fc | 1Fd |

One MF Connector

FIG. 2C

1Ra-d

2Ra-d

16Ra-d

400

B

1Fa-d 2Fa-d

16Fa-d

FIG. 3A

1Ra-d

2Ra-d

F-64-001

16Ra-d

400

B

1Fa-d 2Fa-d

16Fa-d

FIG. 3B

FIG. 4A

FIG. 4B

Case #3: {2,16}

Case #2: {4,8}

FIG. 4C

FIG. 4D

FIG. 5A

FIG. 5B

FIG. 5C

FIG. 5D

FIG. 6A

FIG. 6B

FIG. 6C

FIG. 7A

FIG. 7B

FIG. 7C

FIG. 7D

FIG. 8

Module 400 - # 1

Module 400 - # 2

Module 400 - # 3

Module 400 - # 4

Module 400 - # 8

Front or Back of Module with fabric {Ns=16,NI=32,MI=16}

FIG. 9A

Module 400 - # 1

Module 400 - # 2

Module 400 - # 3

Module 400 - # 4

Module 400 - # 8

Back or Front of Module with fabric {Ns=16,Nl=32,Ml=16}

FIG. 9B

EP 4 586 636 A2

Module 400 - # 1
Module 400 - # 2
Module 400 - # 3
Module 400 - # 4

Module 400 - # 1
Module 400 - # 2
Module 400 - # 3
Module 400 - # 4

Front or Back of Module with fabric {Ns=8,NI=16,MI=16}

FIG. 10A

Back or Front of Module with fabric {Ns=8,NI=16,MI=16}

FIG. 10B

Module 400 - # 1

Module 400 - # 2

Module 400 - # 3

Module 400 - # 4

Module 400 - # 32

Front or Back of Module with fabric {Ns=32,NI=64,MI=32}

FIG. 11A

EP 4 586 636 A2

Module 400 - # 1

Module 400 - # 2

Module 400 - # 3

Module 400 - # 4

Module 400 - # 32

Back or Front of Module with fabric {Ns=32,NI=64,MI=32}

FIG. 11B

FIG. 12A

FIG. 12B

| Case | Configuration |
|------|---------------|
| (a) | *{Ns'=4, Nl'=8, Ml'=4} (original)* |
| (b) | *{Ns'=2,Nl'=16, Ml'=2}* |
| (c) | *{Ns'=16, Nl'=2,Ml'=16}* |
| (d) | *{Ns'=8, Nl'=4,Ml'=8},* |

Table I

# FIG. 13

| X | F-16-001 | F-32-001 | F-48-001 Y=F(X) | F-64-001 | F-128-001 |
|---|---|---|---|---|---|
| 1 | 1 | 1 | 1 | 1 | 1 |
| 2 | 9 | 17 | 33 | 33 | 65 |
| 3 | 5 | 9 | 17 | 17 | 33 |
| 4 | 13 | 25 | 1 | 49 | 97 |
| 5 | 3 | 5 | 9 | 9 | 17 |
| 6 | 11 | 21 | 41 | 41 | 81 |
| 7 | 7 | 13 | 25 | 25 | 49 |
| 8 | 15 | 29 | 9 | 57 | 113 |
| 9 | 2 | 3 | 5 | 5 | 9 |
| 10 | 10 | 19 | 37 | 37 | 73 |
| 11 | 6 | 11 | 21 | 21 | 41 |
| 12 | 14 | 27 | 5 | 53 | 105 |
| 13 | 4 | 7 | 13 | 13 | 25 |
| 14 | 12 | 23 | 45 | 45 | 89 |
| 15 | 8 | 15 | 29 | 29 | 57 |
| 16 | 16 | 31 | 13 | 61 | 121 |
| 17 |  | 2 | 3 | 3 | 5 |
| 18 |  | 18 | 35 | 35 | 69 |
| 19 |  | 10 | 19 | 19 | 37 |
| 20 |  | 26 | 3 | 51 | 101 |
| 21 |  | 6 | 11 | 11 | 21 |
| 22 |  | 22 | 43 | 43 | 85 |
| 23 |  | 14 | 27 | 27 | 53 |
| 24 |  | 30 | 11 | 59 | 117 |
| 25 |  | 4 | 7 | 7 | 13 |
| 26 |  | 20 | 39 | 39 | 77 |
| 27 |  | 12 | 23 | 23 | 45 |
| 28 |  | 28 | 7 | 55 | 109 |
| 29 |  | 8 | 15 | 15 | 29 |
| 30 |  | 24 | 47 | 47 | 93 |
| 31 |  | 16 | 31 | 31 | 61 |
| 32 |  | 32 | 15 | 63 | 125 |

| X | F-16-001 | F-32-001 | F-48-001 Y=F(X) | F-64-001 | F-128-001 |
|---|---|---|---|---|---|
| 33 | 1 | 1 | 2 | 2 | 3 |
| 34 | 9 | 17 | 34 | 34 | 67 |
| 35 | 5 | 9 | 18 | 18 | 35 |
| 36 | 13 | 25 | 2 | 50 | 99 |
| 37 | 3 | 5 | 10 | 10 | 19 |
| 38 | 11 | 21 | 42 | 42 | 83 |
| 39 | 7 | 13 | 26 | 26 | 51 |
| 40 | 15 | 29 | 10 | 58 | 115 |
| 41 | 2 | 3 | 6 | 6 | 11 |
| 42 | 10 | 19 | 38 | 38 | 75 |
| 43 | 6 | 11 | 22 | 22 | 43 |
| 44 | 14 | 27 | 6 | 54 | 107 |
| 45 | 4 | 7 | 14 | 14 | 27 |
| 46 | 12 | 23 | 46 | 46 | 91 |
| 47 | 8 | 15 | 30 | 30 | 59 |
| 48 | 16 | 31 | 14 | 62 | 123 |
| 49 |  | 2 |  | 4 | 7 |
| 50 |  | 18 |  | 36 | 71 |
| 51 |  | 10 |  | 20 | 39 |
| 52 |  | 26 |  | 52 | 103 |
| 53 |  | 6 |  | 12 | 23 |
| 54 |  | 22 |  | 44 | 87 |
| 55 |  | 14 |  | 28 | 55 |
| 56 |  | 30 |  | 60 | 119 |
| 57 |  | 4 |  | 8 | 15 |
| 58 |  | 20 |  | 40 | 79 |
| 59 |  | 12 |  | 24 | 47 |
| 60 |  | 28 |  | 56 | 111 |
| 61 |  | 8 |  | 16 | 31 |
| 62 |  | 24 |  | 48 | 95 |
| 63 |  | 16 |  | 32 | 63 |
| 64 |  | 32 |  | 64 | 127 |

Table II

FIG. 14

**REFERENCES CITED IN THE DESCRIPTION**

**Patent documents cited in the description**

- US 63620261
- US 8621111 B
- US 20120250679 A1
- US 20140025843 A1
- WO 20109099771 A1
- US 20150295655 A
- US 11269152 B